# FASCICULE DE BREVET EUROPEEN

(11) **EP 3 625 181 B1**
(45) Date de publication et mention de la délivrance du brevet: **27.12.2023**
(21) Numéro de dépôt: 18735637.3
(22) Date de dépôt: 18.05.2018
(51) Int. Cl.: C03B 33/033, C03B 33/04

(54) **PROCEDE DE ROMPAGE D'UNE FEUILLE DE VERRE**
VERFAHREN ZUM BRECHEN EINER GLASSCHEIBE
METHOD FOR BREAKING A GLASS SHEET

(30) Priorité: 19.05.2017 FR 1754463
(43) Date de publication de la demande: 25.03.2020
(73) Titulaire: SAINT-GOBAIN GLASS FRANCE, 92400 Courbevoie (FR)
(72) Inventeur: ULLIEL ROCHE, Ivan, 60200 Compiegne (FR); DUMENIL, Thierry, 60280 Margny Les Compiegne (FR)
(74) Mandataire: Saint-Gobain Recherche
(86) Numéro de dépôt international: PCT/FR2018/051204
(87) Numéro de publication internationale: WO 2018/211228

(56) Documents cités:
- WO-A1-2005/123356
- WO-A1-2013/108568
- WO-A1-2016/012725
- FR-A1- 2 379 490
- US-A1- 2009 050 661
- US-A1- 2017 008 794

## Description

La présente invention est relative au domaine du rompage d'une feuille de verre.

Pour réaliser un tel rompage, deux opérations se succèdent :
- une opération préalable de traçage d'une ou plusieurs fissures superficielles à la surface du verre à l'aide, par exemple, d'une molette de verrier ou d'un laser ; ces fissures forment des lignes aux contours de la forme ; cette opération s'appelle l'opération de «découpe» ;
- une opération de propagation de la fissure superficielle initiale à travers l'épaisseur de la feuille de verre ; cette opération s'appelle l'opération de «rompage» et permet de séparer la forme que l'on veut découper de l'échantillon de verre initial, appelé primitif.

Il existe actuellement deux techniques de rompage de verre, en fonction de la complexité du volume à découper :
Pour les formes simples à bords rectilignes non pénétrants à l'intérieur de la forme (pas de concavité sur la forme), il est possible d'utiliser une technique de rompage inverse rectiligne. Il s'agit de réaliser une découpe rectiligne traversante, c'est-à-dire d'un bord à l'autre, puis de mettre l'ensemble de la fissure en extension par soulèvement de la feuille de verre sur toute la longueur de la fissure, au moyen d'une barre ou d'un ou plusieurs contacts ponctuels.

Néanmoins, ce procédé ne permet pas de découper des formes complexes. Pour les formes de contours non rectilignes, on travaille à partir d'une feuille de verre de dimensions plus grandes que la forme à découper. Cette feuille s'appelle le primitif et a généralement la forme d'un trapèze.

On part d'un primitif ayant la forme d'un carré, d'un rectangle ou d'un trapèze.

On trace, par exemple à l'aide d'une molette de verrier, le contour de la forme à découpe. Des découpes complémentaires sous forme de segments droits ou courbes sont disposées en périphérie de la forme à découper. Ces segments s'appellent les traits additionnels et permettent un bon rompage de la partie du primitif située en dehors de la forme à découper.

Un rompage en plusieurs étapes de la partie du primitif située en dehors de la forme à découper conduit à l'obtention de différents morceaux appelés « chutes » autour de la forme complexe à découper.

La forme à découper est ensuite isolée des chutes du primitif.

Dans le cas de découpe de formes complexes décrit ici, le rompage s'effectue par une technique de mise en flexion locale de la fissure initiale par appui sur la chute ou bien par préhension de la chute. La mise en flexion se fait par un mécanisme de bras de levier en appuyant sur la feuille de verre, à l'extérieur de la forme et en un nombre de points limité, sur un revêtement dur ou mou. WO 2016/012725 A1 et FR 2 379 490 décrivent des procédés de découpe de formes complexes.

Le rompage d'une feuille de verre peut se faire par mise en flexion d'une fissure initiale de forme complexe à l'aide d'une mise en flexion de la partie extérieure à la forme à découper.

Le rompage peut se faire sur un tapis souple. Une force est appliquée sur la chute par appui jusqu'à rupture et séparation de la chute.

Le rompage peut aussi se faire sur un tapis dur. La feuille de verre est placée en porte à faux de façon à ce qu'une force appliquée sur la chute par appui ou préhension, permette de déformer la feuille de verre jusqu'à rupture.

Néanmoins, ces techniques présentent plusieurs inconvénients.

Dans le cas du rompage sur un tapis dur, il existe une perte d'une surface de verre sacrificielle nécessaire à la mise en porte à faux lors du rompage.

En outre, il peut exister des problèmes de qualité de découpe des formes complexes, car lorsque l'on applique un appui sur la chute, il n'est généralement pas possible de créer une contrainte de flexion en tout point de la ligne de découpe. C'est notamment le cas pour les formes rentrantes (concaves sur la forme à découper). Dans ce cas-là, il est possible de mettre en flexion le verre à l'entrée de la partie concave, mais dès que la fissure s'est un peu propagée, et avant que l'on ait pu relever l'outil qui exerce l'appui, le champ de contraintes en tête de fissure est modifié par la géométrie du trait de découpe. La flexion pure qui s'exerçait au départ de la partie concave se transforme rapidement en contrainte de cisaillement et génère des écailles. Dans les cas de formes avec un faible rayon, la fissure peut se propager en dehors du trait de découpe initial et générer des rebuts.

Qui plus est, il en résulte une limitation des formes complexes réalisables, en particulier dans le cas des géométries avec petits rayons de courbure concaves (zones incurvées profondes) où il est difficilement possible de placer convenablement un point d'appui.

Ces difficultés rendent le rompage des formes concaves particulièrement délicat. Si le rayon de courbure est faible, les réglages des positions et des efforts des points d'appui deviennent longs et délicats. En production, le rompage de ces géométries est souvent sensible à la moindre variation de paramètres de travail et peut générer de nombreux rebuts. Par ailleurs, la propension du champ de contraintes en tête de fissure à passer d'un mode de flexion pure à un mode de cisaillement est exacerbée lorsque l'épaisseur de verre augmente. Les formes rentrantes sont ainsi réputées très difficiles à exécuter pour du verre épais de 3,85 ou 5 mm.

### RESUME DE L'INVENTION

Un but de l'invention est de fournir un procédé de rompage d'une feuille de verre ayant une qualité de la découpe améliorée.

A cet effet, l'invention a pour objet un procédé de rompage d'une feuille de verre, comprenant :
- une étape de traçage d'un trait de découpe à la surface du verre, au moyen d'un outil de découpe, ledit trait de découpe étant de forme complexe, cette forme complexe étant une ligne courbe, ou succession de traits dont certains au moins ne sont pas rectilignes, ou traits rectilignes avec changements de direction formant au moins une partie concave ;
- une étape de mise en place de moyens d'appui support plan agencés pour générer une force de pression sur ou autour du trait de découpe ; et de la zone à rompre.
- une étape de rompage au moyen d'un moyen d'appui local appliqué en face opposée et en regard du trait de découpe, le moyen d'appui local étant déplacé et appuyé le long du trait de découpe, sur ladite face opposée.

Le moyen d'appui support pouvant être un plan muni d'un revêtement dont la dureté permet de contrôler et limiter la zone de déformation du verre lorsque la force d'appui local est appliquée sur la dite face opposée du trait de découpe.

Cette surface d'appui peut être plane comme décrite ci-dessous, mais également plus ponctuelle (se référer au schéma). L'objectif étant toujours le même, c'est-à-dire d'avoir un contrôle de la déformation du verre pendant l'opération de rompage.

Le moyen permettant de contenir et contrôler la zone de déformation par rapport à la force d'appui local appliquée sur ladite face opposée du trait de découpe peut également être obtenu par maintien par vacuité de la face où s'exerce la force d'appui local.

La force d'appui local appliquée sur la dite face opposée du trait de coupe peux être engendrée par une pression ou une position.

Ce procédé présente l'avantage de permettre d'obtenir un contrôle pour une meilleure qualité de rompage en exerçant un maintien sur la feuille de verre afin de limiter la propagation de la fissure. Le contrôle de la déformation du verre est de sorte que ladite plaque de verre se retrouve agencée entre le moyen d'appui local de rompage et les moyens d'appui de maintien ce qui (permet de contrôler et limiter la flexion de la plaque de verre lors de l'étape de rompage afin de maitriser les zones de propagation de fissure localement ce qui permet de prévenir l'apparition de contraintes de mouvements/contraintes de cisaillement pouvant générer des écailles.

Selon un exemple, le moyen d'appui est surface plane. Cette surface est plaquée contre le verre lors de l'opération de rompage (sur la face sur laquelle le trait de coupe est réalisé). La pression de plaquage est contrôlée. La dureté de cette surface est sélectionnée afin de permettre le contrôle décrit ci-dessus.

Selon un exemple, les moyens d'appui comprennent au moins une paire de corps faisant office de poids, lesdits corps étant agencés de part et d'autre du trait de découpe sur la face sur laquelle le trait est réalisé.

Selon un exemple, chaque corps est un profilé.

Selon un exemple, chaque corps est un plot.

Selon un exemple, les plots d'une paire sont placés de sorte que le trait soit à équidistance desdits plots.

Selon un exemple, chaque plot d'une paire est placé afin de former, avec les plots des paires contiguës, un ensemble rectiligne.

Selon un exemple, les moyens d'appui plan comprennent au moins une paire d'éléments d'aspiration, lesdits éléments d'aspiration étant agencés de part et d'autre du trait de découpe sur la face opposée à celle sur laquelle le trait est réalisé.

Selon un exemple, les éléments d'aspiration sont des zones d'aspiration comprises dans une table d'aspiration.

Selon un exemple, lesdits éléments d'aspiration sont des cloches d'aspiration.

Selon un exemple, les cloches d'aspiration d'une paire sont placées de sorte que le trait soit à équidistance desdites cloches d'aspiration.

Selon un exemple, chaque cloche d'aspiration d'une paire est placée afin de former, avec les cloches d'aspiration des paires contiguës, un ensemble rectiligne.

Selon un exemple, les moyens d'appui plan comprennent une paire de plots ou de cloches d'aspiration et en ce que ladite étape de rompage consiste à, en outre, à déplacer les moyens d'appui plan, ledit déplacement les moyens d'appui plan étant identique et simultané au déplacement du moyen d'appui local.

### DESCRIPTION DES FIGURES

L'invention sera mieux comprise à la lecture de la description qui va suivre, faire uniquement à titre d'exemple non limitatif, en se référant aux figures suivantes :
- Les figures 1a et 1b sont des vues schématiques en coupe verticale de différentes étapes d'un procédé selon un mode particulier de réalisation de l'invention ;
- Les figures 2 à 7 sont des vues schématiques d'un premier mode de réalisation de l'invention et de ses modes d'exécution;
- Les figures 8 à 11 sont des vues schématiques d'un second mode de réalisation de l'invention et de ses modes d'exécution;
- La figure 12 représente une variante des différents modes de réalisation.

### DESCRIPTION DETAILLEE

Un procédé selon un mode particulier de réalisation de l'invention, consiste d'abord en une étape de traçage d'un trait 2 (ou « ligne ») de découpe, c'est-à-dire de création d'une fissure sur une première face 4A de la feuille de verre 4, suivie d'une étape de retournement de la feuille de verre, en vue d'une étape postérieure d'appui local en regard de la fissure, sur la face opposée 4B à la première face. Le trait de découpe tracé correspond par exemple au contour de la forme complexe à découper, sans traits supplémentaires.

A noter qu'on entend, dans tout le texte, par « forme complexe », une ligne courbe, ou succession de traits dont certains au moins ne sont pas rectilignes, ou traits rectilignes avec changements de direction formant au moins une partie concave. Le procédé selon l'invention permet ainsi la découpe d'une forme simple (rectiligne) ou complexe dans une feuille de verre.

On entend par deux formes imbriquées qu'une partie convexe de l'une empiète dans une partie concave de l'autre, i.e. le contour des deux formes ne peut pas être séparé par une droite.

On entend par deux formes tangentes qu'elles ont une partie commune à leur contour.

A noter également que la feuille de verre à découper est plane.

Le traçage du trait de découpe est par exemple réalisé au moyen d'une molette de verrier 6 ou de tout autre instrument de découpe adapté, tel que par exemple un laser. Le trait de découpe 2 est une fissure destinée à permettre le rompage suivant ce trait lors de l'étape de rompage. Il s'agit donc d'une découpe partielle, i.e. seulement sur une partie de l'épaisseur de la feuille de verre. C'est ce qu'on entend par « trait de découpe » dans tout le texte.

Avec ce procédé, comme expliqué ci-dessus, il est possible de supprimer tout ou partie des traits supplémentaires selon la méthode de l'art antérieur. En effet, les trait supplémentaires ne seront éventuellement nécessaires que pour ouvrir le contour afin d'extraire la forme et non plus pour faciliter le rompage des formes complexes.

La première face 4A de la feuille de verre 4, sur laquelle le trait de découpe 2 a été réalisé, est appuyée sur une surface d'appui plan 8. Il s'agit par exemple d'un tapis souple. La déformabilité de la surface d'appui plan 8 est choisie de façon à contrôler le champ de contraintes exercé par le moyen d'appui local. Maîtriser le champ de contraintes permet de maîtriser la longueur de propagation de la fissure. Le but est que la fissure se propage à une longueur prédéterminée en fonction de la forme à découper. La longueur choisie pour la fissure sera d'autant plus petite que le rayon de courbure local est petit. Si la fissure se propage trop vite, la surface devra être choisie moins déformable ou la pression d'appui plus faible. Si la fissure se propage trop lentement, il faudra choisir une surface plus déformable ou une pression d'appui plus importante.

Pour une feuille de verre silico sodo calcique standard de type « Planilux » d'épaisseur 3,15mm, les paramètres étaient les suivants :
Paramètres de découpe :
   Molette : angle 150°, largeur =1 mm , diamètre : 5mm
   Vitesse déplacement molette : 100m/min
   Force exercée sur le verre = 50N
   Pénétration molette dans le verre : 4/100mm
   Epaisseur verre : 3,15mm
Paramètres de rompage inverse :
   Outil de rompage : type roue , diamètre : 5mm, largeur : 1mm
   Vitesse de déplacement outil : 30 m/min
   Force exercée sur le verre = 70N
   Dureté revêtement du moyen d'appui plan : tapis en feutrine de dureté : 45-52 shores

Le moyen d'appui local 10 est par exemple une bille de tout type adapté, ou un autre moyen d'appui local de tout type adapté, par exemple une roulette, de préférence une roulette de forme torique. La bille a par exemple un diamètre de 1mm. En variante, le diamètre est choisi de tout type adapté, notamment jusqu'à 10, voire 20mm.

Le moyen d'appui local 10 est choisi de préférence rigide, par exemple en acier ou un matériau plastique adapté.

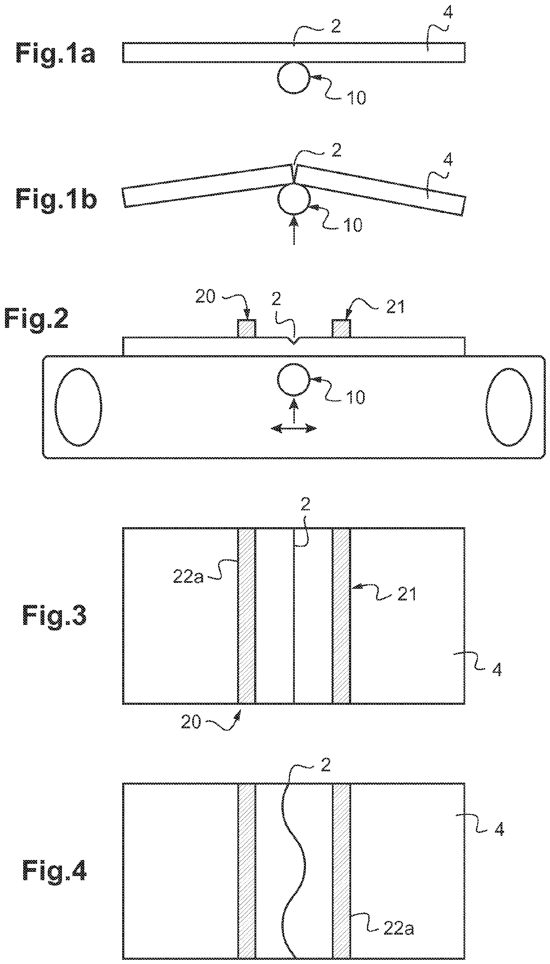

Le moyen d'appui local 10 est déplacé le long du trait de découpe, sur toute la longueur du trait de découpe, de préférence en exerçant une force d'appui continue, par exemple d'intensité constante comme visible aux figures 1a et 1b. En variante cependant, l'appui est continu mais d'intensité variable, par exemple choisie en fonction du rayon de courbure local de la forme à découper et par exemple complétée par une variation d'intensité périodique, c'est-à-dire un appui vibrant. En variante encore, l'appui sur la feuille de verre est réalisé de façon discontinue.

Le moyen d'appui local est déplacé par rapport à la feuille de verre. A noter cependant qu'en variante, c'est la feuille de verre qui est déplacée, ou les deux. D'une manière générale, il s'agit d'un déplacement relatif du moyen d'appui local 10 par rapport à la feuille de verre 4.

La surface d'appui-plan 8 est par exemple formée par une table, et donc par une surface plane continue. Cependant, en variante, la surface d'appui-plan 8 pourrait ne pas être continue. Il pourrait s'agir par exemple de plusieurs appuis-plans obtenus par exemple par des morceaux de tables. Ce qui importe est qu'en regard du moyen d'appui local 10 soit prévu un appui-plan 8, c'est-à-dire un appui au moins deux fois plus large que l'appui exercé par le moyen d'appui local, et ce de façon à obtenir un rompage net.

A noter également que l'étape de retournement est facultative. Il est possible d'utiliser par exemple une table aspirante pour soulever la feuille de verre 4 et ainsi appuyer le moyen d'appui local 10 par le dessous, la première face 4A de la feuille de verre étant alors contre la table aspirante.

Selon l'invention, le procédé de rompage comprend en outre une étape de mise en place de moyens d'appui plan 20. Ces moyens d'appui plan 20 peuvent se présenter sous plusieurs formes.

Ces moyens d'appui plan 20 sont agencés pour générer une force de pression sur la face du verre sur laquelle le trait de découpe 2 est agencé. Cette force de pression est appliquée sur le verre au niveau du trait de découpe.

Ces moyens d'appui plan 20 ont pour fonction d'exercer une contrainte/force de pression sur la plaque de verre 4 afin de contrôler la propagation de la découpe. Cette contrainte/force exercée sur la plaque au niveau de la ligne de découpe permet de contrôler la propagation de la fissure. En effet, cette force de pression est appliquée de sorte que ladite plaque de verre 4 se retrouve agencée entre le moyen d'appui local 10 et les moyens d'appui plan 20. Cet agencement limite voir élimine la flexion de la plaque de verre 4 lors de l'étape de rompage de sorte à éviter l'apparition de contraintes de cisaillement pouvant générer des écailles.

Ce contrôle du rompage est opéré par la contrainte de pression des moyens d'appui plan 20.

Dans un premier mode de réalisation visible à la figure 2, les moyens d'appui plan 20 comprennent au moins deux poids 21. Ces poids 21 sont des corps basiques réalisés dans un matériau métallique ou mineral ou autre. Ces corps sont disposés sur la première face 4A de la feuille de verre 4 sur laquelle le trait de découpe 2 a été réalisé. Cet agencement permet auxdits corps d'exercer une force sur ladite feuille de verre 4.

Dans un premier mode d'exécution visible à la figure 3, les moyens d'appui plan 20 comprennent deux corps 21 faisant office de poids. Ces corps sont agencés pour avoir une forme de barre ou de profilé 22a. Ces profilés 22a sont alors posés de part et d'autre d'une portion du trait de découpe. Selon un premier exemple, les profilés 22a sont rectilignes.

Si la portion est rectiligne comme visible à la figure 3, les profilés 22a rectilignes sont alors posés parallèlement à ladite portion.

Si la portion est courbe, les profilés 22a rectilignes sont alors posés parallèlement à la tangente de ladite portion.

Si la portion est sinusoïdale comme visible à la figure 4, les profilés 22a rectilignes sont alors posés parallèlement à l'axe directeur de ladite portion. On comprend que l'axe directeur est l'axe passant par la valeur moyenne.

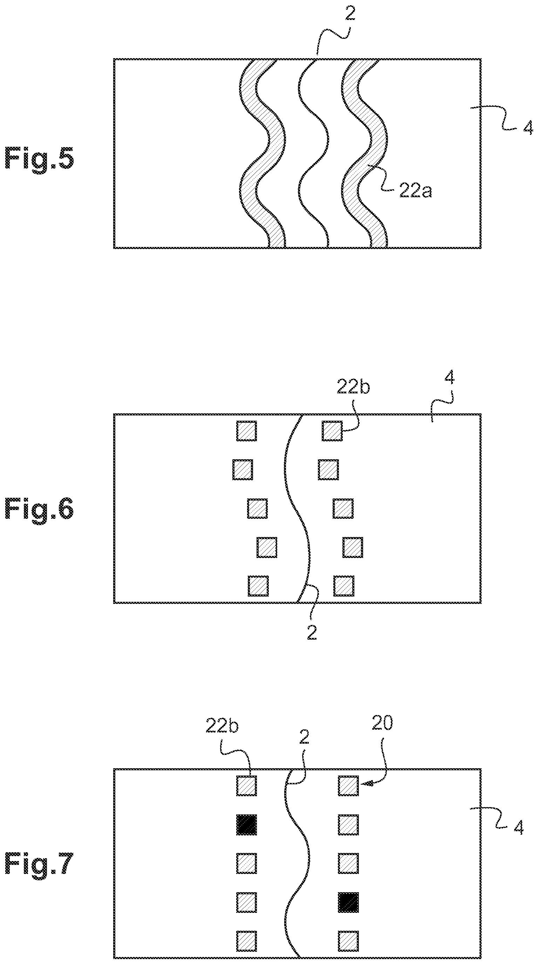

Selon un second exemple visible à la figure 5, les profilés 22a sont une forme similaire au trait de découpe de sorte que si celui-ci est courbe, alors les profilés 22a seront courbes avec la même courbure, et, si le trait est sinusoïdal, alors les profilés 22a seront sinusoïdaux avec la même sinusoïde. Ce second exemple permet, avantageusement, pour les portions non rectilignes, d'avoir les profilés 22a placés à même distance du trait de sorte à ne pas déséquilibrer le rompage.

Dans un second mode d'exécution visible à la figure 6, les moyens d'appui plan 20 comprennent une pluralité de paires de corps 21 faisant office de poids. Ces corps sont réalisés pour avoir, par exemple, une forme de plot 22b ou de pièce cylindrique. Ces plots 22b sont alors posés de part et d'autre d'une portion du trait de découpe 2.

Si la portion est rectiligne, les plots 22b sont alors posés, par paire, de sorte que le trait 2 soit équidistant des deux plots 22b de la même paire. Les paires de plots 22b sont ensuite régulièrement réparties le long de la portion.

Si la portion n'est pas rectiligne, les plots 22b sont avantageusement posés, par paire, de sorte que le trait 2 soit équidistant des deux plots de la même paire comme visible à la figure 6. Les paires de plots 22b sont ensuite régulièrement réparties le long de la portion. Toutefois, dans le cas d'un trait sinusoïdal, les plots 22b pourront être posés de sorte que tous les plots 22b de chaque côté de la sinusoïde soient alignés de façon rectiligne comme visible à la figure 7. Cet agencement est possible car cette répartition en fonction du trait sinusoïdale permet d'appliquer une contrainte homogène le long du trait de rompage 2.

Dans un second mode de réalisation, les moyens d'appui plan 20 comprennent des éléments d'aspiration 23. Ces éléments d'aspiration 23 sont des appareils ou dispositifs comprenant au moins une pompe et une bouche d'aspiration. Ces éléments d'aspiration 23 sont disposés sur la face opposée 4B à la première face de la feuille de verre 4. Cet agencement permet auxdits éléments d'aspiration 23 d'exercer une force de traction sur ladite feuille de verre 4.

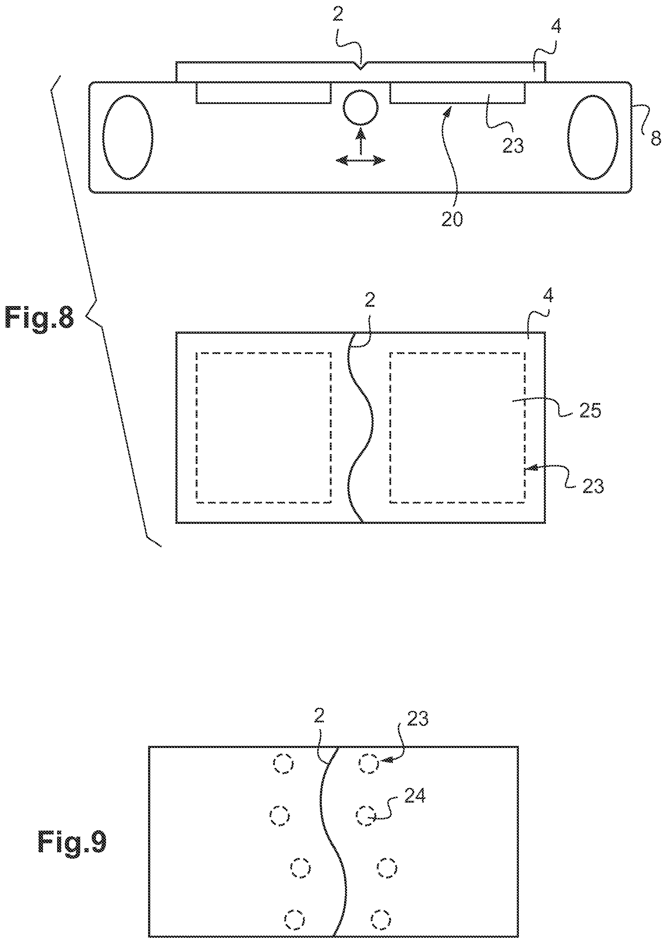

Dans un premier mode d'exécution visible à la figure 8, les éléments d'aspiration 23 comprennent une table d'aspiration. Cette table consiste en une table de découpe, c'est-à-dire permettant le déplacement relatif du moyen d'appui local 10 par rapport à la feuille de verre 4, dont les éléments d'aspiration 23 se présentent sous forme au moins deux zones d'aspiration 25 se présentant chacune sous la forme d'une plaque munie d'au moins un orifice, de préférence une pluralité. Ces plaques sont connectées à une pompe via un conduit qui relie la pompe aux orifices de ladite plaque afin de produire l'effet d'aspiration. Ces deux zones d'aspiration 25 sont agencées pour permettre au moyen d'appui local 10 de circuler entre elles. De cette façon, les zones d'aspiration 25 sont aptes à aspirer la feuille de verre de part et d'autre du trait de rompage.

Dans un second mode d'exécution visible à la figure 9, les éléments d'aspiration 23 comprennent une pluralité de cloches d'aspiration 24. Ces cloches d'aspiration 24, allant de préférence par paire, sont réalisées pour avoir, par exemple, une forme de plot ou de pièce cylindrique. Ces cloches d'aspiration 24 sont alors posées de part et d'autre d'une portion du trait de découpe. Chaque cloche d'aspiration 24 est reliée à un système d'aspiration, qui peut être propre pour chaque cloche ou commun à toutes les cloches d'aspiration 24, pour permettre l'aspiration.

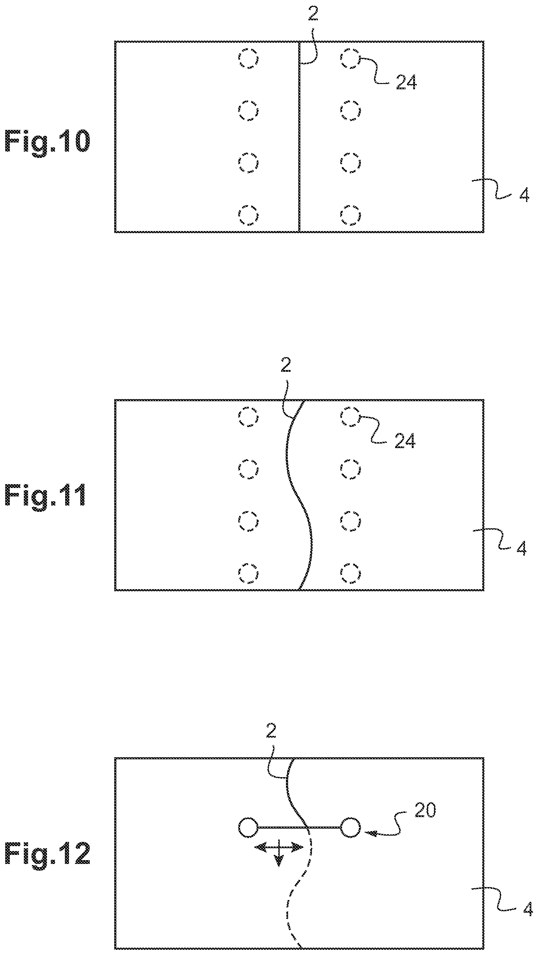

Si la portion est rectiligne, les cloches d'aspiration 24 sont alors posées, par paire, de sorte que le trait soit équidistant des deux plots de la même paire comme visible à la figure 10. Les paires de cloches d'aspiration 24 sont ensuite régulièrement réparties le long de la portion.

Si la portion n'est pas rectiligne, les cloches d'aspiration 24 sont avantageusement posées, par paire, de sorte que le trait soit équidistant des deux cloches d'aspiration 24 de la même paire comme visible à la figure 3. Les paires de cloches d'aspiration 24 sont ensuite régulièrement réparties le long de la portion. Toutefois, dans le cas d'un trait sinusoïdal, les cloches d'aspiration 24 pourront être posés de sorte que tous les cloches d'aspiration 24de chaque côté de la sinusoïde soit aligné de façon rectiligne comme visible à la figure 11. Cet agencement est possible car cette répartition en fonction du trait 2 sinusoïdale permet d'appliquer une contrainte homogène le long du trait de rompage.

Dans une variante des différents modes de réalisation, il est possible d'avoir des moyens d'appui plan mobiles 20. Pour cela, les moyens d'appui plan comprennent deux cloches d'aspiration 24 ou deux corps 21 faisant office de poids. Ces deux cloches d'aspiration 24 ou corps 21 faisant office de poids sont agencés pour être solidaires en déplacement. On comprend par-là que le déplacement d'un des corps faisant office de poids ou d'une des cloches entraîne automatiquement un déplacement identique de l'autre corps faisant office de poids ou de l'autre cloche comme visible à la figure 12.

De cette façon, il est possible que l'étape de rompage se fasse en déplaçant simultanément le moyen d'appui local 10 et les moyens d'appui plan. Cette étape de rompage consiste donc à, premièrement, agencer le moyen d'appui local 10 et les moyens d'appui plan en regard les uns des autres par rapport à la feuille de verre. Dans le cas de cloches d'aspiration 24, l'aspiration est ensuite enclenchée.

Deuxièmement, une pression est exercée sur le moyen d'appui local afin que ce dernier presse la feuille de verre au niveau du trait de rompage et qu'il puisse rompre la feuille de verre.

Troisièmement, le moyen d'appui local et les moyens d'appui plan se déplacent simultanément et de la même façon. On comprend alors que les déplacements du moyen d'appui local et des moyens d'appui plan sont réalisés de sorte que le moyen d'appui local et les moyens d'appui plan soient constamment en regard les uns des autres. Ce déplacement simultané permet avantageusement d'exercer la pression uniquement à l'endroit où le besoin existe pour permettre le rompage.

Bien entendu, la présente invention ne se limite pas à l'exemple illustré mais est susceptible de diverses variantes et modifications qui apparaîtront à l'homme de l'art.

## Revendications

1. Procédé de rompage d'une feuille de verre (4), comprenant :
- une étape de traçage d'un trait de découpe (2) à la surface du verre, au moyen d'un outil de découpe (6), ledit trait de découpe étant de forme complexe, cette forme complexe étant une ligne courbe, ou succession de traits dont certains au moins ne sont pas rectilignes, ou traits rectilignes avec changements de direction formant au moins une partie concave ;
- une étape de mise en place de moyens d'appui plan (20) agencés pour générer une force de pression sur le trait de découpe ; et
- une étape de rompage au moyen d'un moyen d'appui local (10) appliqué en face opposée (4B) et en regard du trait de découpe (2), le moyen d'appui local (10) étant déplacé et appuyé le long du trait de découpe (2), sur ladite face opposée (4B).

2. Procédé de rompage selon la revendication 1, dans lequel les moyens d'appui plan (20) comprennent au moins une paire de corps (21) faisant office de poids, lesdits corps étant agencés de part et d'autre du trait de découpe sur la face sur laquelle le trait est réalisé.

3. Procédé de rompage selon la revendication 2, dans lequel chaque corps (21) est un profilé (22a).

4. Procédé de rompage selon la revendication 2, dans lequel chaque corps (21) est un plot (22b).

5. Procédé de rompage selon la revendication 4, dans lequel les plots d'une paire sont placés de sorte que le trait soit à équidistance desdits plots.

6. Procédé de rompage selon la revendication 4, dans lequel chaque plot d'une paire est placé afin de former, avec les plots des paires contiguës, un ensemble rectiligne.

7. Procédé de rompage selon la revendication 1, dans lequel les moyens d'appui plan (20) comprennent au moins une paire d'éléments d'aspiration (23), lesdits éléments d'aspiration étant agencés de part et d'autre du trait (2) de découpe sur la face opposée à celle sur laquelle le trait est réalisé.

8. Procédé de rompage selon la revendication 7, dans lequel les éléments d'aspiration (23) sont des zones d'aspiration (25) comprises dans une table d'aspiration.

9. Procédé de rompage selon la revendication 7, dans lequel lesdits éléments d'aspiration (24) sont des cloches d'aspiration (24).

10. Procédé de rompage selon la revendication 9, dans lequel les cloches d'aspiration (24) d'une paire sont placées de sorte que le trait soit à équidistance desdites cloches d'aspiration.

11. Procédé de rompage selon la revendication 9, dans lequel chaque cloche d'aspiration (24) d'une paire est placée afin de former, avec les cloches d'aspiration des paires contiguës, un ensemble rectiligne.

12. Procédé de rompage selon les revendications 4 ou 9, dans lequel les moyens d'appui plan (20) comprennent une paire de plots (22b) ou de cloches d'aspiration (24) et en ce que ladite étape de rompage consiste à, en outre, à déplacer les moyens d'appui plan, ledit déplacement les moyens d'appui plan étant identique et simultané au déplacement du moyen d'appui local.

## Patentansprüche

1. Verfahren zum Brechen einer Glasscheibe (4), umfassend:
- einen Schritt eines Zeichnens einer Schnittlinie (2) auf die Glasoberfläche mithilfe eines Schneidwerkzeugs (6), wobei die Schnittlinie eine komplexe Form besitzt, wobei diese komplexe Form ein gekrümmter Strich oder eine Folge von Linien, von denen mindestens einige nicht geradlinig sind, oder geradlinige Linien mit Richtungsänderungen ist, die mindestens einen konkaven Teil ausbilden;
- einen Schritt eines Anbringens von ebenen Auflagemitteln (20), die zum Erzeugen einer Druckkraft auf die Schnittlinie angeordnet sind; und
- einen Schritt des Brechens mittels eines lokalen Auflagemittels (10), das an einer Fläche (4B) gegenüberliegend und der Schnittlinie (2) zugewandt aufgebracht wird, wobei das lokale Auflagemittel (10) auf der gegenüberliegenden Fläche (4B) entlang der Schnittlinie (2) verschoben und gedrückt wird.

2. Brechverfahren nach Anspruch 1, wobei die ebenen Auflagemittel (20) mindestens ein Paar Körper (21) umfassen, die als Gewicht dienen, wobei die Körper auf beiden Seiten der Schnittlinie auf der Fläche angeordnet sind, auf der die Schnittlinie ausgeführt ist.

3. Brechverfahren nach Anspruch 2, wobei jeder Körper (21) ein Profil (22a) ist.

4. Brechverfahren nach Anspruch 2, wobei jeder Körper (21) ein Stift (22b) ist.

5. Brechverfahren nach Anspruch 4, wobei die Stifte eines Paars so platziert sind, dass die Linie von den Stiften abstandsgleich ist.

6. Brechverfahren nach Anspruch 4, wobei jeder Stift eines Paars platziert ist, um mit den Stiften der aneinandergrenzenden Paare eine geradlinige Baugruppe auszubilden.

7. Brechverfahren nach Anspruch 1, wobei die ebenen Auflagemittel (20) mindestens ein Paar Saugelemente (23) umfassen, wobei die Saugelemente auf beiden Seiten der Schnittlinie (2) auf der Fläche angeordnet sind, die derjenigen gegenüberliegt, auf der die Schnittlinie ausgeführt ist.

8. Brechverfahren nach Anspruch 7, wobei die Saugelemente (23) Saugzonen (25) umfassen, die in einem Saugtisch enthalten sind.

9. Brechverfahren nach Anspruch 7, wobei die Saugelemente (24) Saugglocken (24) sind.

10. Brechverfahren nach Anspruch 9, wobei die Saugglocken (24) eines Paars so platziert sind, dass die Linie von den Saugglocken abstandsgleich ist.

11. Brechverfahren nach Anspruch 9, wobei jede Saugglocke (24) eines Paars platziert ist, um mit den Saugglocken der aneinandergrenzenden Paare eine geradlinige Baugruppe auszubilden.

12. Brechverfahren nach den Ansprüchen 4 oder 9, wobei die ebenen Auflagemittel (20) ein Paar Stifte (22b) oder Saugglocken (24) umfassen und dass der Brechschritt ferner aus dem Verschieben der ebenen Auflagemittel besteht, wobei die Verschiebung der ebenen Auflagemittel identisch und gleichzeitig mit der Verschiebung des lokalen Auflagemittels ist.

## Claims

1. A method for breaking a sheet of glass (4), comprising:
- a step of tracing a cutting line (2) on the surface of the glass, using a cutting tool (6), the cutting line having a complex chape, this complex shape being a curved line, or a sequence of lines of which some at least are not rectilinear, or rectilinear lines with changes of direction forming at least one concave part;
- a step of positioning flat supporting bearing means (20) arranged to generate a pressing force on the cutting line; and
- a step of breaking, using a local bearing means (10) applied to the face (4B) opposite to, and facing, the cutting line (2), the local bearing means (10) being moved and applied along the cutting line (2), on said opposite face (4B).

2. The breaking method as claimed in claim 1, wherein the flat bearing means (20) comprise at least a pair of bodies (21) acting as weights, said bodies being arranged on either side of the cutting line on the face on which the line is made.

3. The breaking method as claimed in claim 2, wherein each body (21) is a profiled element (22a).

4. The breaking method as claimed in claim 2, wherein each body (21) is a stud (22b).

5. The breaking method as claimed in claim 4, wherein the studs of a pair are placed so that the line is equidistant from said studs.

6. The breaking method as claimed in claim 4, wherein each stud of a pair is placed so as to form a rectilinear assembly with the studs of the contiguous pairs.

7. The breaking method as claimed in claim 1, wherein the flat bearing means (20) comprise at least a pair of suction elements (23), said suction elements being arranged on either side of the cutting line (2) on the face opposite that on which the line is made.

8. The breaking method as claimed in claim 7, wherein the suction elements (23) are suction areas (25) included in a suction table.

9. The breaking method as claimed in claim 7, wherein said suction elements (24) are suction cups (24).

10. The breaking method as claimed in claim 9, wherein the suction cups (24) of a pair are placed so that the line is equidistant from said suction cups.

11. The breaking method as claimed in claim 9, wherein each suction cup (24) of a pair is placed so as to form a rectilinear assembly with the suction cups of the contiguous pairs.

12. The breaking method as claimed in claim 4 or 9, wherein the flat bearing means (20) comprise a pair of studs (22b) or suction cups (24), and said breaking step also consists in moving the flat bearing means, said movement of the flat bearing means being identical to and simultaneous with the movement of the local bearing means.
